# EUROPEAN PATENT APPLICATION

(11) **EP 1 215 568 A2**
(43) Date of publication of application: **19.06.2002**
(21) Application number: 01660230.2
(22) Date of filing: 17.12.2001
(51) Int. Cl.: G06F 3/14

(54) **Method for transmitting information**

(30) Priority: 15.12.2000 FI 20002759
(71) Applicant: Nokia Corporation, 02150 Espoo (FI)
(72) Inventor: Rantanen, Vesa, 33720 Tampere (FI)
(74) Representative: Pursiainen, Timo Pekka

(57) **Abstract**

The invention relates to a method for transmitting information from a first terminal (1) to a second terminal (4), wherein visual information is displayed on the display (2a) of the first terminal. In the method, at least one area is defined on the display (2a) of the first terminal, the information on which area is transmitted to the second terminal (4). The second terminal (4) is provided with at least one display (2b), wherein the visual information received in the second terminal (4) is displayed on said display (2b) of the second terminal.

## Description

The present invention relates to a method for transmitting information as presented in the preamble of the appended claim 1. The present invention also relates to an information transmission system as presented in the preamble of the appended claim 8. The invention further relates to a terminal as set forth in the preamble of the appended claim 14. The invention further relates to a terminal as set forth in the preamble of the appended claim 17.

A variety of information, such as images, text files, etc., can be stored in modern, wireless communication devices. In addition, the properties of displays in wireless communication devices have advanced to a significant extent, wherein a variety of visual information can be shown on the display. Furthermore, it is possible to couple a digital camera to a wireless communication device, wherein pictures taken by the camera can be watched on the display of the wireless communication device. Also, it is very likely that in the future interest in transmitting information displayed on the display of a wireless communication device to another communication device will be increased. While the properties of portable communication devices more and more begin to resemble the properties of personal data processing devices, it will become even more necessary to transmit, not only pictures, but also windows, for example windows of a so-called desktop or a part of the desktop of the communication device to another communication device. At present such visual information transmission described above is mainly performed so that the user of the wireless communication device makes a multimedia call or the like to the communication device of the recipient. However, this involves the problem that the user cannot have much influence on the contents of the information to be transmitted. In other words, it is not possible for example to limit a picture taken with a digital camera, but the picture must be transmitted in its entirety if prior art methods are applied. Moreover, the user may have stored pictures and/or drawings which he/she does not necessarily want to send in their entirety, but only a part of them.

In the field of computers, some embodiments are known by means of which two or more terminals can communicate with each other and transmit application data between each other. For example different net conferencing embodiments and the like belong to this group. Nevertheless, these embodiments also have the disadvantage that the information transmission can only be carried out for the whole image, for a certain application window or a document and, additionally, a separate session needs to be set up before the information can be transmitted.

A purpose of the present invention is to provide an information transmission system, which enables transmission of only a selected part of information from a first communication device to a second communication device where the received information is displayed. The information is based on the idea that the visual information intended to be transmitted can be limited substantially freely from the whole display area, and this limited information can be transmitted to the receiver. Subsequently, the information received in the communication device of the receiver is displayed. More precisely, the method according to the present invention is primarily characterized in what will be presented in the characterizing part of the appended claim 1. The information transmission system according to the present invention is primarily characterized in what will be presented in the characterizing part of the appended claim 8. Further, the terminal according to the present invention is primarily characterized in what will be presented in the characterizing part of the appended claim 14. Further, the terminal according to the present invention is primarily characterized in what will be presented in the characterizing part of the appended claim 17.

In the following, the invention will be described in more detail with reference to the appended drawings, in which
- Figs. 1a and 1b: show an exemplified situation on applying the method of the invention,
- Fig. 2: shows a terminal according to a preferred embodiment of the invention in a reduced block chart, and
- Fig. 3: shows an information transmission system according to a preferred embodiment of the invention in a reduced chart.

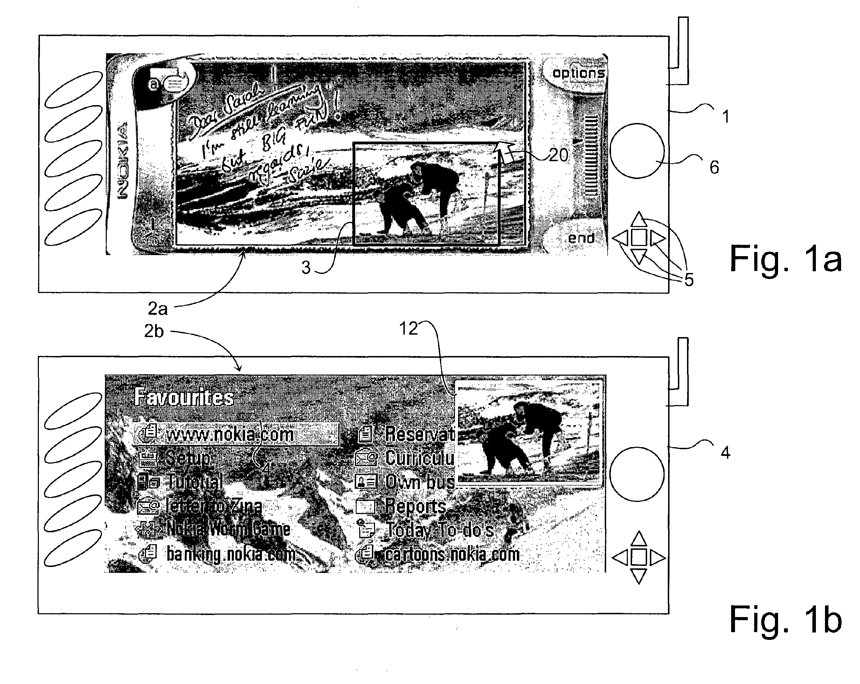

Fig. 1a shows the information displayed, in an exemplary situation, on the display 2a of the first terminal 1. On the display 2a, the user has defined, with a frame 3, an area that is to be transmitted to the second terminal 4. Fig. 1b shows how the information contained in the transmitted area is displayed on the frame 12 on the display 2b of the receiving terminal 4. The transmission can be carried out for example so that the user first defines the limits of the frame 3, for example by using an arrow key 5 or a pointer means 6. Subsequently, the user selects a transmission, for example by pressing a key in the keypad, wherein the first terminal starts transmitting the information contained in the area defined by the frame 3. Another alternative is a continuous transmission, wherein information defined by the frame 3 is constantly transmitted from the first terminal 1 to the second terminal 4. Consequently, the size and/or location of the frame changes made by the user of the first terminal 1 are also seen in the receiving, second terminal 4, substantially immediately after the information has been transmitted from the first terminal 1 to the second terminal 4.

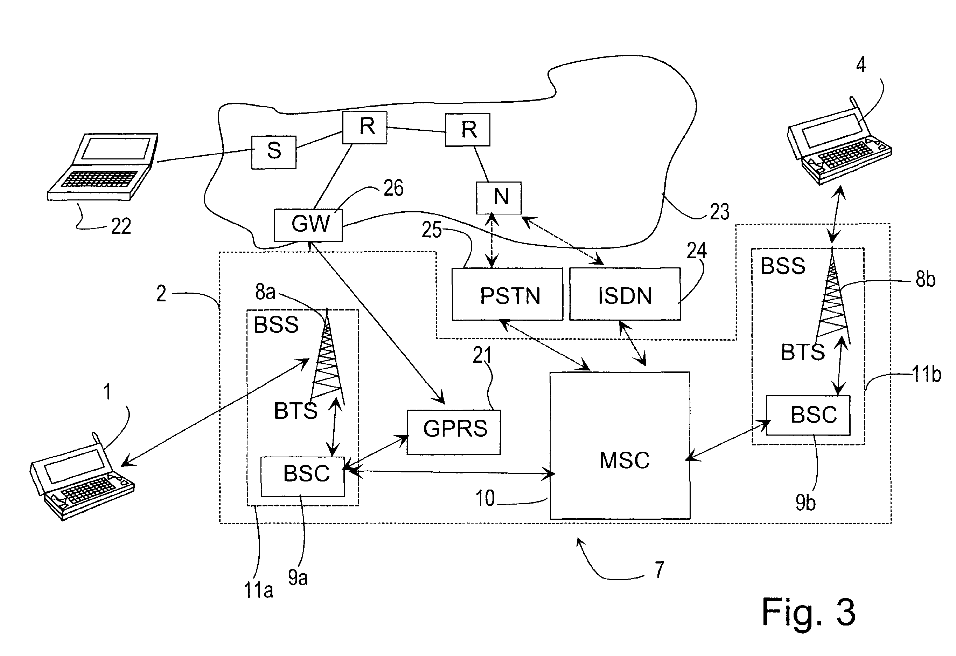

The information transmission is carried out in a manner known as such (Fig. 3) using one or more communication networks, for example a mobile communication network 7. Consequently, a communication link is set up between the first 1 and the second terminal 4, which communication link can be an ordinary voice call, a data call, or a video call, which is set up for example as a circuit-switched connection or a packet connection. In some embodiments it is possible to simultaneously use several of the afore-mentioned connection options, wherein a part of the information, such as the voice information, is transmitted for example by means of a circuit-switched connection, and a part of the information, such as the visual information, is transmitted for example via a packet-switched connection. In the connection, the first terminal 1 communicates with a base station 8a of a first base station subsystem 11a, from which base station 8a the information is transmitted by means of a base station controller 9a and a mobile services switching centre 10 to a base station system 11b in whose area the second terminal 4 is situated at the time. Thus, the second terminal 4 communicates with a base station 8b belonging to this second base station subsystem 11b, which base station 8b communicates with a base station controller 9b of this base station subsystem. The first 1 and the second terminal 4 can also be situated inside the area of the same base station subsystem 11a, 11b, or even inside the area of the same base station 8a, 8b.

If packet-switched information transmission is used, the first terminal 1 forms packets of the information to be sent, these packets being transmitted via the base station controller 9a to a packet switched network, preferably to a GPRS packet network 21, from which the packets are further transmitted to the second terminal 4 in a manner known as such. Accordingly, in this example the terminals 1, 4 are wireless communication devices, but it is obvious that the invention can also be applied in connection with other terminals, such as personal data processing devices provided with telecommunication terminal properties, and in public switched telephone network.

In the second terminal 4, the information transferred via the communication network 7, 23, 24, 25 is received and the necessary actions are performed, such as displaying the visual information on the display 2b, and conversion of voice information into acoustic signals.

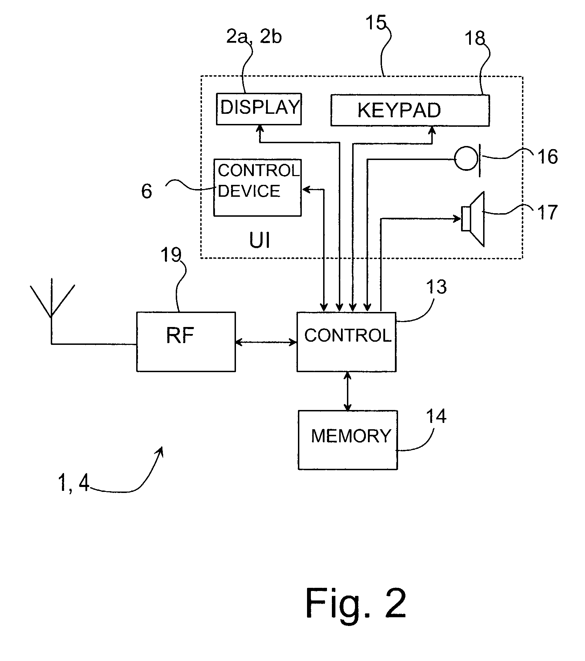

The appended Fig. 2 shows, in a reduced block chart, the structure of a terminal 1 complying with a preferred embodiment of the invention. The terminal comprises a control block 13 comprising for example a microcontroller and an application specific integrated circuit. Moreover, the terminal 1, 4 comprises a memory, for example for storing data during use, for storing images, applications and text files, for storing application files, and for storing program codes required in the operation of the terminal 1, 4 in a manner known as such. The user interface 15 of the terminal 1, 4 preferably comprises a microphone 16, an earpiece 17, a keypad 18 and a display 2a, 2b. The terminal 1, 4 can further comprise a pointer means 6, such as a roller ball or the like. By means of a radio part 19 the terminal 1, 4 can communicate with a mobile communication network 7.

In the following, a situation is described, in which a user of the first terminal 1 initiates a multimedia call to the second terminal 4. Consequently, in the mobile communication network 7, sufficient communication capacity is allocated for the connection for transmission of audio information and visual information in the mobile communication network between terminals 1 and 4. The user of the first terminal can have on the display for example a so-called desktop on which a wallpaper, application icons, application windows for active applications etc. can be shown. During the call the user can also activate and terminate applications, move icons on the display and/or application windows to a different place, change the size and the definitions of the application windows, etc. If the user of the first terminal 1 now wishes to transmit the limited visual information to the second terminal 4, the user activates the limiting function, for example by means of the keypad 18 by using the menu functions of the terminal. At this stage the control block 13 discovers that the user has activated a limiting frame, whereafter the control block 13 checks in the memory 14 the definitions set for this limiting frame 3, such as the default position and the default size. Subsequently, this limiting frame 3 is displayed on the display 2a. After this the user can, for example by using the arrow key 5 or the pointer device 6, move a cursor 20 displayed on the display 2a to this limiting frame 3. The user can, if he/she so wishes, move the limiting frame 3 on the screen 2a and change the size of the limiting frame 3. The control block 13 examines the movements of the pointer means 6 and pressings of the keypad 18, preferably the pressings of the arrow keys 5, and concludes on the basis of them, whether the limiting frame 3 needs to be moved and/or whether its size needs to be changed, and changes the information on the display 2a accordingly. If the user has selected a controlled transmission from the settings, the user can, by pressing a key defined for this purpose, activate the transmission of the image area limited by the limiting frame. At this phase the control block 13 examines at which point of the memory means 14 the area defined on the display 2a by the limiting frame 3 is located. This can be concluded for example so that co-ordinate data of the angle points of the limiting frame 3 is stored in the memory means 14. On the basis of the co-ordinate data this control block 13 calculates, from the storing area of the image information formed in the memory means 14, which memory elements belong inside the limited area. Usually the image information is stored in successive memory elements of the memory means 14 row by row, wherein the last pixel of the row is in the memory usually followed by the first pixel of the following row. The size of the memory area required by the image depends for example on the resolution of the display 2a and on the type of the display, that is, whether the display 2a is a colour display or a monochromatic (for example black and white) display. When a colour display is used, typically three numeric values are stored for every pixel, each of which represents information on one basic colour. In the most common colour displays, red (R), green (G) and blue (B) are used as the basic colours.

After the storing location is defined for the pixels on the area defined by the limiting frame 3, the control block 13 starts, by means of the radio part 19, to transmit data from the memory means 14 to the mobile communication network 7, by means of a modem (not shown) or the like, to a public switched communication network 23, 24, 25, if a terminal 22, which is coupled to the public switched communication network 23, 24, 25, is used, which is known as such. In the communication network 7, 23, 24, 25 the information is transferred to the second terminal 4, in which the information is received and transferred to be processed by the control block 13. With the information to be transferred, information on the size and possibly also the location of the limiting frame is also transmitted, wherein the visual information contained in the limiting frame can be displayed in the corresponding size and, if desired, at the respective location on the display 2b of the second terminal 4. The received visual information can be stored in the memory means 14, immediately in a memory area allocated for the display information, wherein the changes are shown substantially directly on the display 2b, or a temporal memory area can be used, into which the data is stored, whereafter the data is transferred to the right location in the memory area allocated on the display. In the method according to a preferred embodiment of the invention, the user of the receiving terminal 4 can, if the user so wishes, define the location where the received visual information is presented. In addition, the user of the receiving terminal 4 can also change the image proportions, that is, to stretch or narrow the visual information in the lateral and/or vertical direction. Consequently, the control block modifies the visual information, if necessary, to correspond to the changed image proportions, and transfers the information to the location on the memory area allocated on the display that has been defined by the frame 3, 12.

The visual information can also be transmitted continuously, wherein the transmission of the visual information defined by the limiting frame 3 is performed from the first terminal 1 at regular intervals, for example once every second, more often or more seldom. Thus, the information is updated on the display 2b of the receiving terminal 4 at a corresponding rate, if the data transfer capacity of the mobile communication network 7 is sufficient. In this type of automatic transmission, the transfer of the limiting frame and/or the size change, performed in the first terminal 1, can be seen in the second terminal 4 substantially right after the new information has been received and processed in the second terminal 4. In case the user of the second terminal 4 has set a fixed location for the received visual information, the visual information is always displayed on the same location, even if the limiting frame 3 were moved in the first terminal 1. On the other hand, if the user of the second terminal 4 has selected a function in which also the movements of the limiting frame 3 are observed, the location information of the frame is also transmitted from the first terminal 1 to the second terminal 4, on the basis of which the received visual information can be displayed in a corresponding location on the display 2b of the second terminal 4.

The invention can be applied in connection with various types of terminals 1, 4. The terminal 1, 4 can comprise for example a touch screen, wherein the user can make personal markings on the display. Consequently, the user can for example write or draw on the limiting frame, wherein these markings of the user are also shown in the second terminal 4.

The invention can also be applied in such a manner that if the area defined by the limiting frame 3 contains information in which other kind of information than visual information has also been added, for example voice information, this voice information can be transferred also in connection with the transmission of the visual information. Such a situation can occur for example when an icon displayed on the display 2a is supplemented with sound, an application, or the like in the first terminal 1. Thus, the user of the first terminal 1 can define whether other information related to this icon is also transmitted in addition to the visual information. In this manner, the transmission of for example applications, ringing tones, electric postcards, or the like, can be implemented between the terminals 1, 4 in a user-friendly manner, because in such a situation it is not necessary for the user of the first terminal 1 to separately search and transmit one or several files related to the application.

In the information transmission it is possible to use known compression methods, by means of which the quantity of the information to be transmitted can be reduced.

In Fig. 3, the reference numeral 22 also represents, a terminal connected to a public switched telecommunication network, which terminal can be used in the present invention both as the first 1 and the second terminal 4. Communication to such a terminal 22 is performed for example through the Internet data network 23. The Internet data network 23 preferably comprises at least routers R and terminal servers S, which is known as such. Furthermore, in the communication network 7, 23 of Fig. 3, a communication link can be set up between the mobile communication network 7 and the Internet data network 23, for example via a packet network 21 (General Packet Radio Service, GPRS), an integrated services digital network 24 (ISDN) and/or a public switched telephone network 25 (PSTN). The mobile communication network 7 preferably comprises base station subsystems 11a, 11b (BSS) and at least one mobile services switching centre 10 (MSC). From the packet network 21, a data transmission connection is set up to the Internet data network 23, preferably via a gateway support node 26. The wireless terminals 1, 4 used can be for example so-called communicator type wireless communication devices or other communication devices provided with means for processing visual information in addition to and/or in connection with the mobile station functions. An example of such a known communicator type device is Nokia 9110 Communicator. It is obvious that the information transmission system according to the preferred embodiment of the invention shown in Fig. 3 is only a reduced example, but in practical applications, the structure of the information transmission system 7, 23 can differ, even to a significant degree, from the example of Fig. 3. For example the Internet data network comprises a large number of routers R, nodes N and terminal servers S. In addition, the information transmission system 7, 23 can comprise a wireless local area network (WLAN), known as such, which is not shown in the accompanying figures.

Even though both the first 1 and the second terminal 4 are substantially identical in the above-described example, it is obvious that the properties of the terminals 1, 4 can also differ from each other. If the resolution of the display 2b of the second terminal 4 differs from the resolution of the first terminal 1, the resolution of the image information defined by the is changed, if necessary, before it is displayed on the display 2b of the second terminal.

Further, it is obvious that even though the invention was described above in a such manner that information was transmitted from the first terminal 1 to the second terminal 4, corresponding actions can also be performed vice versa, wherein the limiting frame is used in the second terminal 4. By means of this limiting frame the user of the second terminal 4 can define an area on the display 2b, the visual information on which is transmitted to the first terminal 1 to be displayed on the display 2a of the first terminal. The invention can also be applied bidirectionally, wherein both in the first 1 and in the second terminal 4 the limiting frame 3 is used for defining the visual information that is transmitted.

The present invention can also be applied in a variety of situations, in which visual information is transmitted between the terminals 1, 4. The user can for example activate various applications, open a document on the display 2a, open an image application, take pictures by a camera connected to the terminal, etc. Consequently, by placing the frame 3 in accordance with the invention, the user can select visual information from a variety of applications to be sent simultaneously to the second terminal 4. This arrangement enables the transmission of very versatile information and it is obvious that the above described example is merely one applicable embodiment.

Moreover, the area defined by the limiting frame 3 does not have to be oblong, but the limiting frame 3 can be for example circular, triangular, polygonal, or it can even have a substantially free form. Thus, the control block 13 defines a necessary number of such points that can be used to define the area on the display 2a, 2b defined by the limitation block 3. In addition, more than one area can be defined, wherein the information on several such areas can be transmitted between the terminals 1, 4. Also, the limiting frame displayed on the display does not have to be closed, but the area defined by the limiting frame can be expressed for example by means of markings shown on the angles, as a hatched area, as a darker or a brighter area, etc.

It is obvious that the present invention is not limited solely to the above-presented embodiments, but it can be modified within the scope of the appended claims.

## Claims

1. A method for transmitting information from a first terminal (1) to a second terminal (4), in which method visual information is displayed on a display (2a) of the first terminal, **characterized in that** in the method at least one area on the display (2a) of the first terminal is defined, the information on which area is transmitted to the second terminal (4) provided with at least one display (2b), wherein the visual information received in the second terminal is displayed on said display (2b) of the second terminal.

2. The method according to claim 1, **characterized in that** said area is defined by means of a limiting frame (3) displayed on the display (2a).

3. The method according to claim 2, **characterized in that** the location, the size and/or the shape of said limiting frame (3) can be changed.

4. The method according to claim 1, 2 or 3, **characterized in that** the visual information received in the second terminal (4) is displayed on a fixed location of said display (2b) of the second terminal.

5. The method according to claim 1, 2 or 3, **characterized in that** the presentation location of the visual information received in the second terminal (4) can be changed in the display (2b) of the second terminal.

6. The method according to claim 5, **characterized in that** information related to the location of the area defined on the display (2a) of the first terminal is transmitted to the second terminal (4), wherein the visual information transmitted from the defined area is displayed on a substantially corresponding location on said display (2b) of the second terminal.

7. The method according to any of claims 1 to 6, **characterized in that** the information displayed on the area defined on the display (2a) of the first terminal is transmitted at intervals, wherein the visual information is updated at intervals on the display (2b) of the second terminal.

8. An information transmission system comprising means (7, 23, 24, 25) for transmitting information from a first terminal (1) to a second terminal (4), which first terminal comprises at least one display (2a) for displaying visual information, **characterized in that** the system further comprises means (5, 6, 18) for defining at least one area on the display (2a) of the first terminal, means (19) for transmitting information contained in said area to the second terminal (4), in connection of which at least one display (2b) is arranged, wherein the second terminal (4) comprises means (13, 14) for displaying the received visual information on said display (2b) of the second terminal.

9. The information transmission system according to claim 8, **characterized in that** said means for defining said area comprise means for displaying a limiting frame (3) on the display (2a), and means (5, 6, 18) for changing the location, the size and/or the shape of said limiting frame (3).

10. The information transmission system according to claim 8 or 9, **characterized in that** the second terminal (4) comprises means for changing the presentation location of the received visual information on said display (2b) of the second terminal.

11. The information transmission system according to claim 10, **characterized in that** it comprises means (7, 13, 19, 23, 24, 25) for transmission of information related to the location of the area defined on the display (2a) of the first terminal to the second terminal (4), wherein the second terminal (4) comprises means (13, 14) for displaying the visual information on a substantially corresponding location on said display (2b) of the second terminal.

12. The information transmission system according to any of claims 8 to 11, **characterized in that** the first terminal (1) comprises means (13) for transmitting information displayed on an area defined on the display (2a) at intervals, wherein the transmitted visual information on the display (2b) of the second terminal is arranged to be updated at intervals.

13. The information transmission system according to any of claims 8 to 12, **characterized in that** at least one terminal (1, 4) is a wireless communication device.

14. A terminal (1), comprising means (19) for transmitting information to a communication network (7, 23, 24, 25), and at least one display (2a) for displaying visual information, **characterized in that** the terminal further comprises means (5, 6, 18) for defining at least one area on said display (2a), means (19) for transmitting the information contained in said limited area to the communication network (7, 23, 24, 25).

15. The terminal according to claim 14, **characterized in that** said means for defining said area comprise means for displaying a limiting frame (3) on the display (2a), and means for changing the location, the size and/or the shape of said limiting frame (3).

16. The terminal according to claim 14 or 15, **characterized in that** it comprises means (13) for transmitting the information displayed on the area defined on the display (2a) at intervals.

17. The terminal (4), comprising means (19) for receiving the visual information, and at least one display (2b) for displaying the visual information, **characterized in that** the terminal further comprises means (13, 14) for displaying on the display (2b) at least one piece of visual information contained in the limited area, which visual information is created of a limited area on the display (2a) of the first terminal.

18. The terminal according to any of claims 14 to 17, **characterized in that** it is a wireless communication device.
